# EUROPÄISCHE PATENTSCHRIFT

(11) **EP 3 217 103 B1**
(45) Veröffentlichungstag und Bekanntmachung des Hinweises auf die Patenterteilung: **08.05.2019**
(21) Anmeldenummer: 17159117.5
(22) Anmeldetag: 03.03.2017
(51) Int. Cl.: F24D 19/00, F16K 43/00, F24D 19/10

(54) **VENTILEINSATZ FÜR EIN HEIZKÖRPERVENTIL UND HEIZKÖRPER MIT HEIZKÖRPERVENTIL**
VALVE INSERT FOR A RADIATOR VALVE AND RADIATOR HAVING RADIATOR VALVE
CORPS DE SOUPAPE POUR UNE SOUPAPE DE CORPS CHAUFFANT ET CORPS CHAUFFANT COMPRENANT UNE SOUPAPE DE CORPS CHAUFFANT

(30) Priorität: 10.03.2016 DE 102016104411
(43) Veröffentlichungstag der Anmeldung: 13.09.2017
(73) Patentinhaber: Oventrop GmbH & Co. KG, 59939 Olsberg (DE)
(72) Erfinder: Spiekermann, Ralf, 59939 Olsberg (DE); Wundling, Dirk, 59939 Olsberg (DE)
(74) Vertreter: Köchling, Conrad-Joachim

(56) Entgegenhaltungen:
- EP-A1- 2 696 145
- DE-A1- 3 607 129
- DE-A1-102005 037 769
- DE-A1-102007 016 960
- DE-U1-202011 107 574

## Beschreibung

Die Erfindung betrifft einen Heizkörper mit mindestens zwei Heizelementen, einem Heizkörperventil und einem Ventileinsatz für das Heizkörperventil zum Steuern der Durchflussmenge eines Heizmediums und/oder zum Regeln der Durchflussmenge eines Heizmediums, insbesondere auch unabhängig von dem über das gesamte Heizkörperventil wirkenden Differenzdruck, der eine Voreinstellvorrichtung aufweist, mittels derer die Durchflussmenge auf einen vorzugebenden Wert drosselbar ist, und der mit einer Zu- und Abströmöffnung in dem Heizkörperventil so positioniert ist, dass die dem Heizkörper zugeführte Durchflussmenge in einem beliebigen Verhältnis auf die mindestens zwei Heizelemente des Heizkörpers aufteilbar ist und/oder wahlweise die Durchflussmenge ausgerichtet in das eine oder andere Heizelement einströmt.

Ventileinsätze für Heizkörperventile mit den zuvor beschriebenen Merkmalen sind im Stand der Technik bekannt. So zeigt z.B. die DE 102007016960 einen Ventileinsatz zum Steuern der Durchflussmenge, der unter Zuhilfenahme von anströmbaren Mitteln die aus seiner Abströmöffnung austretende Durchflussmenge in einer wählbaren Strömungsrichtung dem einen oder anderen Heizelement des Heizkörpers oder auch beiden Heizelementen gleichzeitig zuführt. Um die auf ein Heizelement gerichtete Strömung zu verändern muss der Ventileinsatz gelöst, der Ventileinsatz und/oder das anströmbare Mittel verdreht und der Ventileinsatz wieder festgezogen werden.

Auch in der EP 2696145 wird ein Ventileinsatz für ein Heizkörperventil zum Steuern der Durchflussmenge eines Heizmediums gezeigt, wobei der Ventileinsatz zwei Abströmöffnungen aufweist, die den anströmbaren Mitteln fest zugeordnet sind und durch die die Strömung auf ein erstes und/oder zweites Heizelement eines Heizkörpers gelenkt wird. Die Anströmmittel sind hier im Gehäuse des Heizkörperventils fest angeordnet bzw. Bestandteil des Gehäuses. Die den Heizelementen zugeordneten Strömungsrichtungen sind hier nicht veränderbar.

In der DE202010014349 ist ein Heizkörperventil dargestellt, dessen Ventileinsatz ebenfalls zwei Abströmöffnungen aufweist durch die die Durchflussmenge über separate, im Ventilgehäuse fest verbaute Einbauteile in die Heizelemente geleitet wird. Eine Veränderung der den Heizelementen zugeordneten Strömungsrichtung ist auch hier nicht möglich.

Somit haben alle aus dem Stand der Technik bekannten Lösungen den Nachteil, dass eine Ausrichtung der vom Heizkörperventil oder von dem darin verbauten Ventileinsatz abgehenden Strömung in die Heizelemente entweder fest vorgegeben oder nur durch Lösen und wieder Festziehen des Ventileinsatzes möglich ist. Dieser Nachteil wirkt sich besonders bei der Installation von Heizkörpern mit mindestens zwei Heizelementen aus, bei denen das Heizkörperventil entweder links oder rechts seitlich angeschlagen ist. Da es aus Komfort- oder energetischen Gründen gewünscht ist, das Heizelement des Heizkörpers, das dem zu beheizenden Raum zugewandt ist, zuerst oder gegenüber dem zweiten Heizelement überwiegend zu durchströmen, müssen für beide Installationsarten wegen der festgelegten Strömungsführungen im Heizkörper zwei Varianten vorgehalten werden. Bei der Lösung mit dem verdrehbaren anströmbaren Mittel am Ventileinsatz ist zwar nur eine Heizkörpervariante erforderlich, es ist aber ein aufwendiger Montagevorgang nötig, um die Strömung auf die Heizelemente neu auszurichten (Heizkörper drucklos machen, ggf. Wasser ablassen, Ventileinsatz lösen, anströmbares Mittel verdrehen, Ventileinsatz wieder so festziehen, dass die neue Position des anströmbaren Mittels sich dabei nicht verändert).

Ventileinsätze mit denen nicht nur die Durchflussmenge gesteuert sondern auch so geregelt wird, dass eine eingestellte Durchflussmenge über dem Heizkörperventil konstant gehalten wird, zeigt die DE 102014004907. Wie derartige Ventileinsätze bzw. die aus deren Abströmöffnung austretende Durchflussmenge mit anströmbaren Mitteln kombiniert werden können, um die Strömung auf das ein oder andere Heizelement mehr oder weniger auszurichten, ist aus dem Stand der Technik nicht bekannt.

Aus der DE 20 2011 107 574 U1 ist eine Anschlussvorrichtung für einen Heizkörper mit mindestens zwei Heizelementen bekannt, die hohl ist und diverse Möglichkeiten zum Verbinden des Vorlaufes mit einem ersten Auslass und einem zweiten Auslass beinhaltet, wobei die hohle Anschlussvorrichtung auch eine Verstelleinrichtung zum Verstellen der Durchflussmenge des Heizmediums durch die beiden Auslässe zu den Heizkörpern beinhaltet.

Der vorliegenden Erfindung liegt nun die Aufgabe zu Grunde, einen Ventileinsatz für Heizkörperventile zur Steuerung und/oder Regelung der Durchflussmenge und/oder Voreinstellung der Durchflussmenge bereitzustellen, der die Einstellung der Strömungsrichtung der Durchflussmenge in die Heizelemente eines Heizkörpers am montierten Ventileinsatzes und auch während des Betriebes des Heizkörpers ermöglicht.

Die Aufgabe wird für den Ventileinsatz nach den Merkmalen des Anspruches 1 dadurch gelöst, dass in den Ventileinsatz eine Vorrichtung zur Einstellung der Strömungsrichtung integriert ist, die von außen zugänglich und betätigbar ist, nämlich im verbauten Zustand des Ventileinsatzes und während des Betriebs des Heizkörpers und eine direkte Veränderung der Strömungsrichtung und / oder eine Aufteilung der Durchflussmenge, die vom Ventileinsatz abströmt, ermöglicht.

Eine besonders bevorzugte Lösung zeichnet sich dadurch aus, dass die Vorrichtung zur Einstellung der Strömungsrichtung zusammen mit der Vorrichtung zur Voreinstellung der Durchflussmenge Bestandteile eines gemeinsamen Ventileinsatzes sind.

Funktionsbedingt sind hierbei vorzugsweise beide Vorrichtungen durch eine Verzahnung derart gekoppelt, dass zum einen bei Betätigung der Vorrichtung zur Einstellung der Strömungsrichtung der durch die Vorrichtung zur Voreinstellung der Durchflussmenge eingestellte Wert nicht verändert wird, zum anderen bei Betätigung der Vorrichtung zur Voreinstellung der Durchflussmenge der durch die Vorrichtung zur Einstellung der Strömungsrichtung vorgegebene Wert beibehalten wird.

Die funktionsbedingte Kopplung kann so gestaltet sein, dass ein Versteller in Längsachse zum Ventileinsatz in eine erste Position verschiebbar ist, in der die Vorrichtung zur Einstellung der Strömungsrichtung über die Verzahnung drehfest mit dem Kopfstück des Ventileinsatzes verbunden ist, wobei das Kopfstück fest in einem Gehäuse eines Heizkörperventils verschraubt ist. Die Vorrichtung zur Voreinstellung der Durchflussmenge bleibt hierbei relativ zur Vorrichtung zur Einstellung der Strömungsrichtung verdrehbar.

Bevorzugt ist hierbei vorgesehen, dass die Vorrichtung zur Voreinstellung der Durchflussmenge ein Regelstück mit einem Abströmfenster aufweist, das durch Verdrehung mit einer in der Vorrichtung zur Einstellung der Strömungsrichtung vorgesehene Abströmöffnung zur Überdeckung gebracht werden kann, wobei die Abströmöffnung die Strömungsrichtung der aus dem Ventileinsatz abgehenden Durchflussmenge vorgibt.

Eine zweite durch den Versteller funktionsbedingte Kopplung wird vorzugsweise durch sein Verschieben in eine zweite Position erreicht, wobei die drehfeste Verbindung der Vorrichtung zur Einstellung der Strömungsrichtung zum Kopfstück des Ventileinsatzes hin gelöst wird, statt dessen eine drehfeste Verbindung zur Vorrichtung zur Voreinstellung der Durchflussmenge über die Verzahnung hergestellt wird.

Bevorzugt wird das Verschieben des Verstellers durch ein Bedienelement durchgeführt, das auf den Versteller von außen einwirkt und diesen gegen eine Federkraft in die zweite Position überführt.

Vorteilhaft sind hierbei zwischen dem Bedienelement und dem Versteller korrespondierende Rastelemente, durch die eine Drehbewegung auf die Vorrichtung zur Einstellung der Strömungsrichtung übertragen wird, so dass bei dieser Verdrehung jetzt die Vorrichtung über ihr Abströmfenster eine andere Abströmrichtung der Durchflussmenge erzeugt. Dabei bleibt die Größe der Durchflussmenge wegen der drehfesten Verbindung zwischen den beiden Vorrichtungen erhalten.

Eine weitere vorteilhafte Ausbildung erhält man durch Mitnahmeelemente, die einerseits an dem Bedienelement und andererseits an der Einstellvorrichtung für die Durchflussmenge vorgesehen sind und ineinandergreifen, um eine Drehbewegung vom Bedienelement auf diese Einstellvorrichtung zu übertragen, wobei das Bedienelement in zwei Positionen axial verschiebbar ist, wobei in der zweiten axialen Position des Bedienelementes der Versteller gegen eine Federkraft auf die Einstellvorrichtung für die Strömungsrichtung gedrückt ist, so dass die Verzahnung zwischen Versteller, der mir der Einstellvorrichtung für die Abströmrichtung drehfest verbunden ist, auch mit der Einstellvorrichtung für die Durchflussmenge im Eingriff ist und mit dieser eine drehfeste Verbindung hergestellt ist, sodass durch die vom Bedienelement ausgeübte Drehbewegung die Abströmrichtung verändert wird aber nicht die Durchflussmenge, da das Abströmfenster der Einstellvorrichtung für die Durchflussmenge und das Abströmfenster der Einstellvorrichtung für die Abströmrichtung eine feste Zuordnung zueinander haben, und wobei in der ersten axialen Position das Bedienelement den Versteller frei gibt, der durch die Federkraft von der Vorrichtung weg gegen einen Anschlag im Kopfstück gedrückt wird und in dieser Position der Versteller einerseits drehfest über die eine Verzahnung zwischen Kopfstück und Versteller mit dem Kopfstück verbunden ist, andererseits die Verzahnung zwischen Einstellvorrichtung für die Durchflussmenge und dem Versteller außer Eingriff ist, so dass die vom Bedienelement ausgeübte Drehbewegung in der ersten axialen Position die Abströmrichtung vom Ventileinsatz nicht verändert, jedoch die Durchflussmenge variiert wird.

Um die zuvor beschriebene Möglichkeit mit einem Bedienelement beide Einstellfunktionen ausführen zu können ist bevorzugt vorgesehen, dass Mitnahmeelemente am Bedienelement und an der Einstellvorrichtung für die Durchflussmenge bei der Übertragung der Drehbewegung vom Bedienelement auf die Einstellvorrichtung für die Durchflussmenge in der zweiten axialen Position des Bedienelementes einen größeren Überdeckungsbereich aufweisen als in der ersten axialen Position.

Ein Vorteil in der Handhabung des Bedienelementes wird erzielt, indem beim Verschieben des Bedienelementes von der einen in die andere axiale Position ein mechanischer Widerstand zu überwinden ist, um die beiden Einstellfunktionen bei der Handhabung unterscheiden zu können.

Für die Ablesbarkeit der Einstellwerte ist bevorzugt vorgesehen, dass auf der von außen zugänglichen Seite der Vorrichtung zur Einstellung der Durchflussmenge eine Skalierung für die Durchflussmenge angebracht ist, die mit einem auf den Versteller angebrachten Sollwertanzeiger korrespondiert.

Dabei ist es von Vorteil, wenn der Sollwertanzeiger fluchtend zur Abströmöffnung angeordnet ist und so auch als Sollwertanzeiger für die Abströmrichtung dient.

Ein Ventileinsatz mit den zuvor beschriebenen Merkmalen schafft somit die Möglichkeit, zum einen die Richtung der auf die Heizelemente eines Heizkörpers zuströmenden Durchflussmenge zu verändern, die Durchflussmenge aber selbst beizubehalten, zum anderen die Größe der Durchflussmenge zu verändern, jedoch dann die Abströmrichtung aus dem Ventileinsatz beizubehalten, wobei diese Änderungsmöglichkeiten am Ventileinsatz mit Mitteln erfolgen, die von außen, d. h. im verbauten Zustand des Ventileinsatzes und unter Betrieb des Heizkörpers, zugänglich sind.

Die Erfindung betrifft ferner einen Heizkörper mit einem Heizkörperventil und einem Ventileinsatz nach einem der Ansprüche 1 bis 12.

Zur Lösung der oben genannten Aufgabe ist auch hierbei ein entsprechender Ventileinsatz vorgesehen, wobei der Heizkörper dadurch gekennzeichnet ist, dass der Heizkörper zwei zueinander parallel angeordnete Heizelemente vorzugsweise in Form von Heizplatten aufweist, deren Innenraum von Heizmedium durchströmbar ist, wobei die Heizelemente durch einander kreuzende Rohrstücke verbunden sind, deren erste koaxiale Rohrstücke in die Heizelemente münden und deren zweite koaxiale Rohrstücke den Ventileinsatz aufnehmen, wobei ein Ende der zweiten Rohrstücke ein erstes Ende des Ventileinsatzes aufnimmt und an einen Heizmediumvorlauf angeschlossen ist, das andere Ende der zweiten Rohrstücke von einem zweiten Ende des Ventileinsatzes durchgriffen ist und mündungsseitig mit dem Kopfstück des Ventileinsatzes gewindemäßig verbunden ist, wobei das Abströmfenster sowie die Abströmöffnung zu einem Anschlussbereich des ersten koaxialen Rohrstücks offen ist, das in ein Heizelement mündet.

Eine vorteilhafte Weiterbildung wird darin gesehen, dass das mit dem Kopfstück bestückte Ende des Ventileinsatzes eine Befestigung für ein Betätigungsteil aufweist, welches auf eine Ventilspindel des Ventileinsatzes einwirkt, und wobei über dieses Ende des Ventileinsatzes Einstellmittel für die Vorrichtung zur Einstellung der Strömungsrichtung und Einstellmittel für die Vorrichtung zur Voreinstellung der Durchflussmenge zugreiflich sind, sowie der Versteller betätigbar ist.

Ebenso ist vorzugsweise vorgesehen, dass zwischen der Zuströmöffnung des Ventileinsatzes und der Abströmöffnung ein Ventilsitz ausgebildet ist, der mit einem an einer Ventilspindel des Ventileinsatzes angeordneten Ventilkörper zusammen wirkt.

Ein Ausführungsbeispiel der Erfindung ist in der Zeichnung dargestellt und im Folgenden näher beschrieben. Es zeigt:
- Fig. 1: Einen Heizkörper mit einem Heizkörperventil und einem Ventileinsatz in Seitenansicht, teilweise geschnitten;
- Fig. 2: eine Einzelheit des Ventileinsatzes von oben gesehen;
- Fig. 3: den Ventileinsatz in Seitenansicht teilweise im Mittellängsschnitt gesehen;
- Fig. 4: eine Einzelheit in Seitenansicht, teilweise aufgebrochen;
- Fig. 5: eine Einzelheit in Seitenansicht;

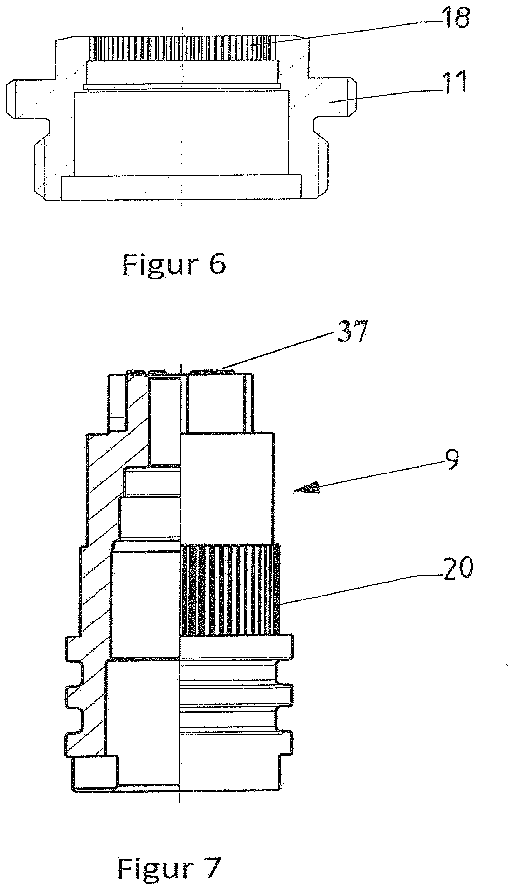

- Fig. 6: eine weitere Einzelheit in Seitenansicht im Schnitt gesehen;
- Fig. 7: eine Einzelheit in Seitenansicht, teilweise geschnitten;
- Fig. 8: eine Seitenansicht des Ventileinsatzes teilweise geschnitten in einer zweiten Betriebslage;
- Fig. 9: ein Betätigungselement in Seitenansicht und in Draufsicht gesehen.

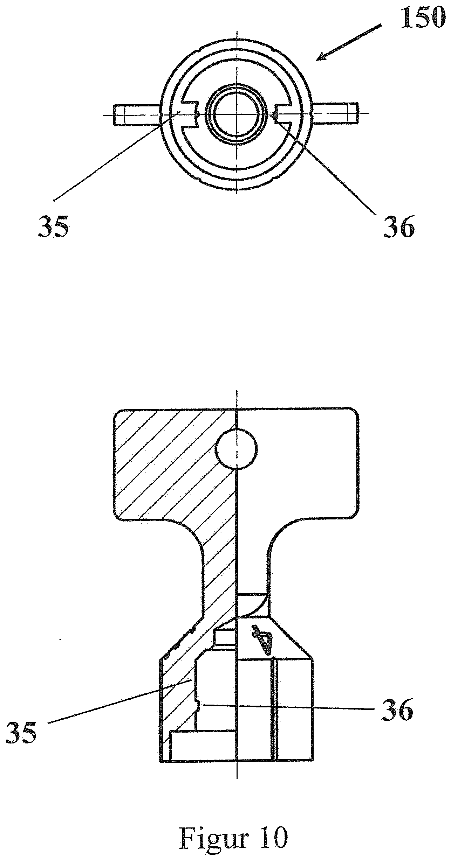

- Fig. 10: ein weiters Betätigungselement in Seitenansicht und in Draufsicht gesehen.

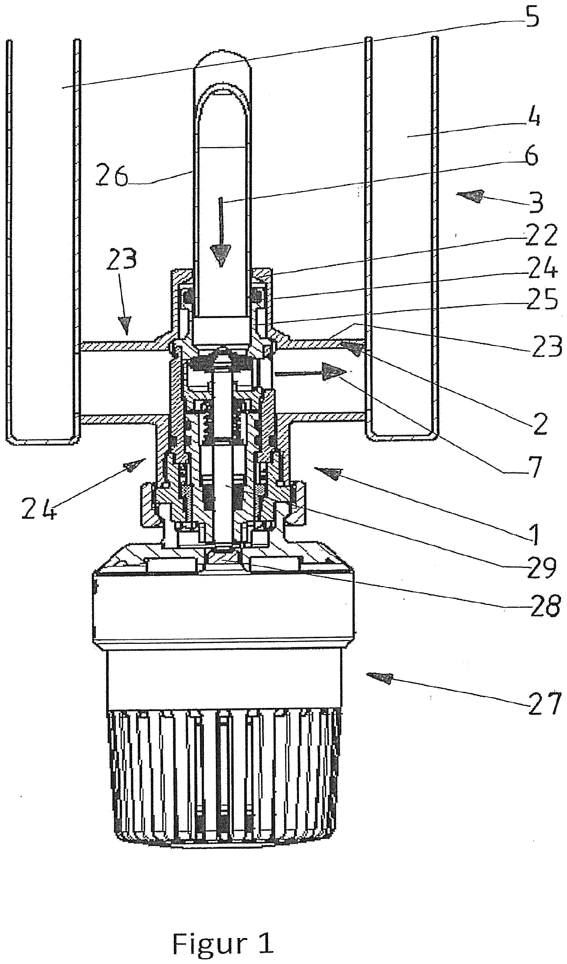

In Figur 1 ist ein Heizkörper 3 mit einem Heizkörperventil 2 und einem Ventileinsatz 1 gezeigt. Der Heizkörper 3 weist zwei zueinander parallel angeordnete Heizelemente 4, 5 auf. Diese sind vorzugsweise in Form von Platten ausgebildet, wobei der Innenraum dieser Heizelemente 4, 5 von Heizmedium durchströmbar ist. Die Heizelemente 4, 5 sind durch einander kreuzende Rohrstücke 23, 24 verbunden. Die ersten zueinander koaxialen Rohrstücke 23 münden offen in die Heizelemente 4, 5 ein. Die zweiten koaxialen Rohrstücke 24 nehmen den Ventileinsatz 1 auf. Das in Figur 1 obere Ende der zweiten Rohrstücke 24 nimmt ein erstes Ende 25 des Ventileinsatzes 1 auf. An dieses erste Ende 25 des Ventileinsatzes 1 ist ein Heizmediumvorlauf 26 dicht angeschlossen. Das andere Ende des zweiten Rohrstückes 24 ist von einem zweiten Ende des Ventileinsatzes 1 durchgriffen und mündungsseitig des Rohrstückes 24 mit einem Kopfstück 11 des Ventileinsatzes gewindemäßig verbunden.

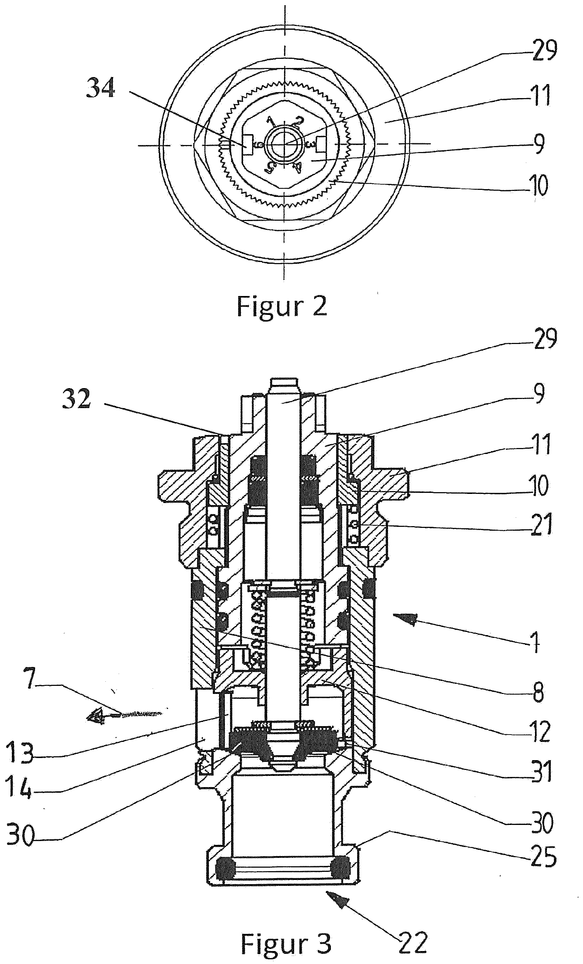

Ein später noch im Einzelnen beschriebenes Abströmfenster 13 sowie eine Abströmöffnung 14 ist zu einem Anschlussbereich des ersten koaxialen Rohrstückes 23 offen, welches in eines der Heizelemente 4, 5 mündet. Das mit dem Kopfstück 11 bestückte Ende des Ventileinsatzes 1 weist eine Befestigungsmöglichkeit für ein Betätigungsteil 27 auf. Das Betätigungsteil 27 ist im Ausführungsbeispiel ein Thermostatkopf. Dieses Betätigungsteil wirkt mit einem Stößelelement 28 auf das Ende einer Ventilspindel 29 des Ventileinsatzes 1 ein. Über dieses in Figur 1 untere Ende des Ventileinsatzes 1 (in Figur 3 oberes Ende) sind Einstellmittel für eine Vorrichtung 8 zur Einstellung der Strömungsrichtung 7 und Einstellmittel für eine Vorrichtung 9 zur Voreinstellung der Durchflussmenge zugreiflich, insbesondere ist hier ein Versteller 10 angeordnet, um unterschiedliche Stellungen einstellen zu können. Dieser Versteller 10 ist ebenfalls von der Kopfseite des Ventileinsatzes 1 her zugreiflich, sofern das Betätigungsteil 27 entfernt ist.

Zwischen einer Zuströmöffnung 22 des Ventileinsatzes 1 und der Abströmöffnung 14 ist im Ventileinsatz ein Ventilsitz 30 ausgebildet, der mit einem an der Ventilspindel 29 des Ventileinsatzes 1 endseitig angeordneten Ventilkörper 31 zusammenwirkt.

Der Ventileinsatz 1 ist in besonderer Weise gestaltet, um die Einstellung der Strömungsrichtung 7 insbesondere wahlweise zu einem der beiden Heizelemente 4 oder 5 bei einem an dem Heizkörper montierten Ventileinsatz auch während des Betriebes des Heizkörpers zu ermöglichen.

Hierbei dient der Ventileinsatz 1 für ein Heizkörperventil 2 im Ausführungsbeispiel zum Steuern der Durchflussmenge eines Heizmediums und/oder zum Regeln der Durchflussmenge eines Heizmediums gegebenenfalls auch unabhängig von dem über das gesamte Heizkörperventil 2 wirkenden Differenzdruck, wobei der Ventileinsatz eine Voreinstellvorrichtung 9 aufweist, mittels derer die Durchflussmenge auf einen vorzugebenden Wert gedrosselt werden kann. Desweiteren ist der Ventileinsatz 1 mit seiner Zu- und Abströmöffnung 22, 14 in dem Heizkörperventil 2 so positioniert, dass die dem Heizkörper 3 zugeführte Durchflussmenge 6 in beliebigen Verhältnis auf mindestens zwei Heizelemente 4, 5 des Heizkörpers 3 aufgeteilt wird und/oder wahlweise die Durchflussmenge 6 ausgerichtet in das eine oder andere Heizelement 4 oder 5 einströmt.

Hierbei ist vorgesehen, dass in den Ventileinsatz 1 eine Vorrichtung 8 zur Einstellung der Strömungsrichtung der Durchflussmenge 6 integriert ist, die von außen zugänglich ist und betätigbar ist und eine direkte Veränderung der Strömungsrichtung 7 der vom Ventileinsatz 1 abgehenden Durchflussmenge 6 ermöglicht. Wenn in diesem Zusammenhang von außen zugänglich oder von außen betätigbar die Rede ist, so bedeutet dies, dass die Vorrichtung 8 von der Kopfseite des Ventileinsatzes 1 her zugänglich ist und betätigbar ist, welche Kopfseite in der normalen Betriebslage nach außen freiliegt und beispielsweise durch das Betätigungsteil 27 abgedeckt ist, welches vor der Einstellung abzunehmen ist.

Die Vorrichtung 8 zur Einstellung der Strömungsrichtung 7 ist gemeinsam mit der Vorrichtung 9 zur Voreinstellung der Durchflussmenge 6 Bestandteil des gemeinsamen Ventileinsatzes 1.

Diese beiden Vorrichtungen 8, 9 sind durch eine drehfeste Verbindung, insbesondere eine Verzahnung 17, 18 beziehungsweise 19, 20 in der Weise gekoppelt, dass in einer Betriebslage bei Betätigung der Vorrichtung 8 zur Einstellung der Strömungsrichtung der durch die Vorrichtung 9 zur Voreinstellung der Durchflussmenge eingestellte Wert nicht verändert wird. In einer anderen Betriebslage wird bei Betätigung der Vorrichtung 9 zur Voreinstellung der Durchflussmenge der durch die Vorrichtung 8 zur Einstellung der Strömungsrichtung vorgegebene Zustand beibehalten. Somit kann nicht nur die Strömungsrichtung in einfacher Weise bestimmt werden also die Einströmung in das Heizelement 4 oder das Heizelement 5 vorgesehen sein, sondern es wird gleichzeitig sichergestellt, dass Voreinstellungen der Durchflussmenge durch Veränderung der Strömungsrichtung nicht verändert werden. Analog umgekehrt ist auch die Einstellung der Durchflussmenge völlig unabhängig von der Richtungseinstellung durchzuführen, so dass die Richtung beibehalten wird, wenn die Durchflussmenge verändert wird.

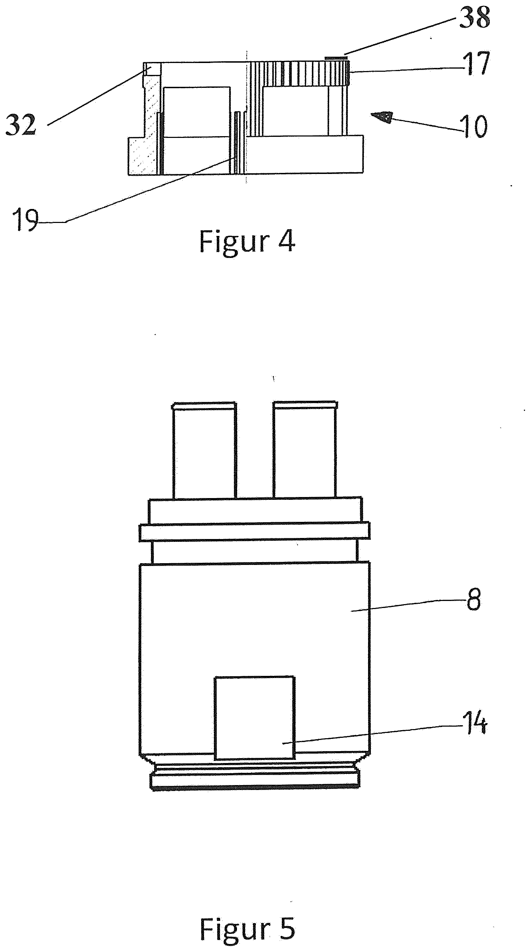

Insbesondere ist hierzu ein Versteller 10 am oberen, mit dem Betätigungsteil 27 zu versehenen Ende des Ventileinsatzes 1 vorgesehen. Der Versteller 10 ist beispielsweise in Figur 4 gezeigt. Es ist ein ringförmiges Element, welches parallel zur Längsachse des Ventileinsatzes in eine erste Position verschiebbar ist, in der die Vorrichtung 8 zur Einstellung der Strömungsrichtung über die Verzahnung 17, 18 drehfest mit dem Kopfstück 11 des Ventileinsatzes 1 verbunden ist, wobei das Kopfstück 11 fest mit dem Rohrstück 24 verschraubt ist, welches quasi ein Gehäuseteil des Heizkörperventils 2 bildet. In dieser Stellung ist die Vorrichtung 9 zur Voreinstellung der Durchflussmenge relativ zur Vorrichtung 8 zur Einstellung der Strömungsrichtung verdrehbar.

Diese Position ist in der Figur 3 gezeigt.

Die Vorrichtung 9 zur Voreinstellung der Durchflussmenge weist ein Regelstück 12 mit einem Abströmfenster 13 auf, welches durch Verdrehung mit einer in der Vorrichtung 8 zur Einstellung der Strömungsrichtung vorgesehenen Abströmöffnung 14 zur Überdeckung oder zur teilweisen Überdeckung gebracht werden kann, wobei die Abströmöffnung 14 die Strömungsrichtung 7 der aus dem Ventileinsatz abgehenden Durchflussmenge vorgibt.

Durch den Versteller 10 ist eine zweite funktionsbedingte Kopplung durch Verschieben des Verstellers 10 in eine zweite Position erreichbar. Hierbei wird dann eine drehfeste Verbindung über die Verzahnung 17, 18 der Vorrichtung 8 zur Einstellung der Strömungsrichtung zu einem Kopfstück 11 des Ventileinsatzes 1 hin gelöst und stattdessen wird die drehfeste Verbindung zur Vorrichtung 9 zur Voreinstellung der Durchflussmenge über eine drehfeste zweite Verbindung hergestellt, nämlich die Verzahnung 19, 20. Die Verzahnung 17 beziehungsweise 19 ist jeweils Bestandteil des Verstellers 10, wie insbesondere aus Figur 4 ersichtlich ist. Die Verzahnung 18 ist am Kopfstück derart vorgesehen, dass sie mit der Verzahnung 17 durch Axialverschiebung des Teiles 10 in Eingriff bringbar ist. Die Verzahnung 20 ist an dem hülsenartigen Teil welches Bestandteil der Vorrichtung 9 ist außenseitig vorgesehen, während die Verzahnung 19, die hiermit zusammenwirkt, ebenfalls am Versteller 10 angeordnet ist. Durch Axialverschiebung des Verstellers 10 ist entweder die Verzahnung 17 mit der Verzahnung 18 in Eingriff oder die Verzahnung 19 mit der Verzahnung 20.

Zur Einstellung sind zwei unterschiedliche Bedienelemente vorgesehen, nämlich ein erstes Bedienelement 150 und ein zweites Bedienelement 15.

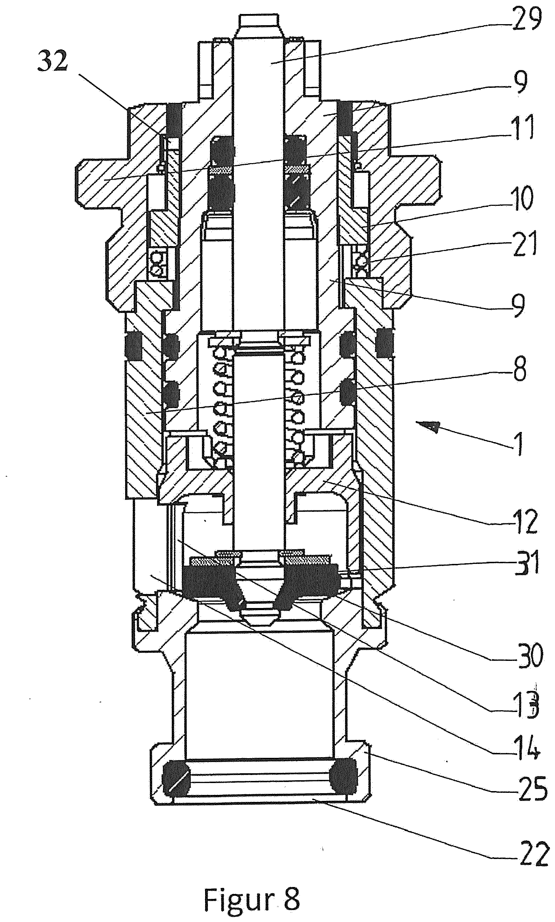

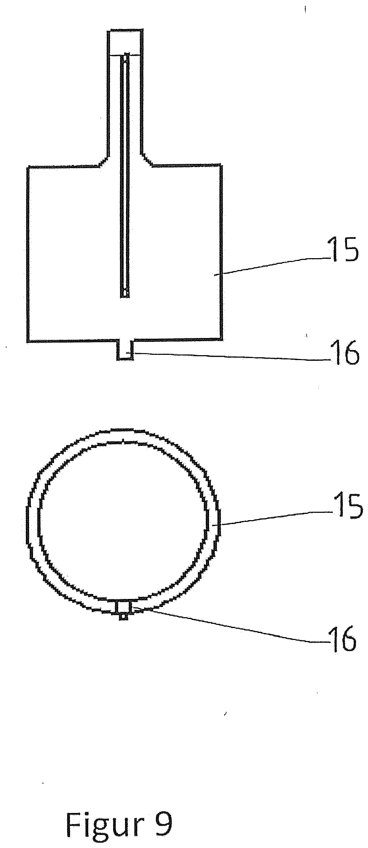

Zur Verschiebung des Verstellers 10 ist das Bedienelement 15 vorgesehen, das kopfseitig des Ventileinsatzes 1 (in Figur 3 oder 8 von oben) einwirken kann. Das Bedienelement 15 ist in Figur 9 gezeigt. Es ist in einen Bereich einschiebbar, der zwischen dem Kopfstück 11 und der Vorrichtung 9 ausgebildet ist. Der Versteller 10 wird durch eine sich an einen Bestandteil der Vorrichtung 8 abstützende Feder 21 in die Betriebsrichtung gedrückt, die in Figur 3 gezeigt ist. Durch das Bedienelement 15 kann der Versteller 10 in die Position gemäß Figur 8 verschoben werden, wobei diese Verschiebung entgegen der Kraft der Feder 21 erfolgt, so dass nach Entfernung des Bedienelementes 15 sich zwangläufig wieder die Position gemäß Figur 3 einstellt.

Vorzugsweise sind zwischen Bedienelement 15 und Versteller 10 zusammenwirkende Rastelemente 16 beziehungsweise Rastausnehmungen 32 vorgesehen, durch die somit eine Drehbewegung vom Bedienelement 15 auf den Versteller 10 und von diesem auf Bestandteile der Vorrichtung 8 zur Einstellung der Strömungsrichtung übertragen werden, so dass das zugehörige Abströmfenster 14 in eine andere Abströmrichtung 7 der Durchflussmenge verstellt wird und die Größe der Durchflussmenge erhalten bleibt.

Eine weitere vorteilhafte Ausbildung erhält man durch Mitnahmeelemente 34/35, die einerseits an dem ersten Bedienelement 150 und andererseits an der Einstellvorrichtung 9 für die Durchflussmenge vorgesehen sind und ineinandergreifen, um eine Drehbewegung vom Bedienelement auf diese Einstellvorrichtung zu übertragen, wobei das Bedienelement in zwei Positionen axial verschiebbar ist, wobei in der zweiten axialen Position des Bedienelementes der Versteller 10 gegen eine Federkraft auf die Einstellvorrichtung 8 für die Strömungsrichtung gedrückt ist, so dass die Verzahnung 19/20 zwischen Versteller 10, der mit der Einstellvorrichtung 9 für die Abströmrichtung drehfest verbunden ist, auch mit der Einstellvorrichtung 9 für die Durchflussmenge im Eingriff ist und mit dieser eine drehfeste Verbindung hergestellt ist, sodass durch die vom Bedienelement ausgeübte Drehbewegung die Abströmrichtung verändert wird aber nicht die Durchflussmenge, da das Abströmfenster 13 der Einstellvorrichtung für die Durchflussmenge und das Abströmfenster 14 der Einstellvorrichtung für die Abströmrichtung eine feste Zuordnung zueinander haben, und wobei in der ersten axialen Position das Bedienelement 150 den Versteller 10 frei gibt, der durch die Federkraft von der Vorrichtung weg gegen einen Anschlag im Kopfstück 11 gedrückt wird und in dieser Position der Versteller einerseits drehfest über die eine Verzahnung 17/18 zwischen Kopfstück und Versteller mit dem Kopfstück verbunden ist, andererseits die Verzahnung 19/20 zwischen Einstellvorrichtung 9 für die Durchflussmenge und dem Versteller 10 außer Eingriff ist, so dass die vom Bedienelement 150 ausgeübte Drehbewegung in der ersten axialen Position die Abströmrichtung 7 vom Ventileinsatz nicht verändert, jedoch die Durchflussmenge variiert wird.

Die Erfindung ist nicht auf die Ausführungsbeispiele beschränkt, sondern im Rahmen des durch die Patentansprüche definierten Schutzumfangs vielfach variabel.

Alle in der Beschreibung und/oder Zeichnung offenbarten Einzel- und Kombinationsmerkmale werden als erfindungswesentlich angesehen.

### Stückeverzeichnis

- 1: Ventileinsatz
- 2: Heizkörperventil
- 3: Heizkörper
- 4: Heizelement von 3
- 5: Heizelement von 3
- 6: Durchflussmenge
- 7: Strömungsrichtung
- 8: Vorrichtung zur Einstellung der Strömungsrichtung 7
- 9: Vorrichtung zur Voreinstellung der Durchflussmenge
- 10: Versteller
- 11: Kopfstück von 1
- 12: Regelstück
- 13: Abströmfenster
- 14: Abströmöffnung
- 15: Bedienelement für 10
- 16: Vorsprung an 15
- 17: Verzahnung
- 18: Verzahnung
- 19: Verzahnung
- 20: Verzahnung
- 21: Feder
- 22: Zuströmöffnung
- 23: Rohrstück (erste)
- 24: Rohrstück (zweite)
- 25: Erstes Ende von 1
- 26: Heizmediumvorlauf
- 27: Betätigungsteil
- 28: Stößelelement
- 29: Ventilspindel
- 30: Ventilsitz
- 31: Ventilkörper
- 32: zu 16 korrespondierendes Rastelement
- 34: Mitnahmeelement an der Vorrichtung zur Voreinstellung der Durchflussmenge
- 35: Mitnahmeelement am Bedienelement 150
- 36: Mechanischer Widerstand
- 37: Skalierung auf der Vorrichtung zur Voreinstellung der Durchflussmenge
- 38: Sollwertanzeiger für die Abströmrichtung

## Patentansprüche

1. Heizkörper (3) mit mindestens zwei Heizelementen (4,5), einem Heizkörperventil (2) und einem Ventileinsatz (1) für das Heizkörperventil (2) zum Steuern der Durchflussmenge eines Heizmediums und/oder zum Regeln der Durchflussmenge eines Heizmediums, insbesondere auch unabhängig von dem über das gesamte Heizkörperventil wirkenden Differenzdruck, der eine Voreinstellvorrichtung (9) aufweist, mittels derer die Durchflussmenge auf einen vorzugebenden Wert drosselbar ist, und der mit einer Zu- und Abströmöffnung (22, 14 in dem Heizkörperventil (2) so positioniert ist, dass die dem Heizkörper (3) zugeführte Durchflussmenge (6) in einem beliebigen Verhältnis auf die mindestens zwei Heizelemente (4, 5) des Heizkörpers aufteilbar ist und/oder wahlweise die Durchflussmenge (6) ausgerichtet in das eine oder andere Heizelement (4, 5) einströmt, **dadurch gekennzeichnet, dass** in den Ventileinsatz (1) eine Vorrichtung (8) zur Einstellung der Strömungsrichtung (7) integriert ist, die von außen zugänglich und betätigbar ist, nämlich im verbauten Zustand des Ventileinsatzes (1) und während des Betriebs des Heizkörpers (3) und eine direkte Veränderung der Strömungsrichtung (7) und / oder eine Aufteilung der Durchflussmenge(6), die vom Ventileinsatz (1) abströmt, ermöglicht.

2. Heizkörper nach Anspruch 1, **dadurch gekennzeichnet, dass** beide Vorrichtungen (8, 9) durch drehfeste Verbindungen, insbesondere eine Verzahnung (17, 18) und (19, 20) derart gekoppelt sind, dass zum einen bei Betätigung der Vorrichtung (8) zur Einstellung der Strömungsrichtung (7) der durch die Vorrichtung (9) zur Voreinstellung der Durchflussmenge (6) eingestellte Wert nicht veränderbar ist, zum anderen bei Betätigung der Vorrichtung (9) zur Voreinstellung der Durchflussmenge (6) der durch die Vorrichtung (8) zur Einstellung der Strömungsrichtung vorgegebene Wert beibehaltbar ist.

3. Heizkörper nach einem der Ansprüche 1 oder 2, **dadurch gekennzeichnet, dass** ein axial verschiebbarer Versteller (10), der mit der Vorrichtung (8)zur Einstellung der Strömungsrichtung drehfest verbunden ist, in Längsachse zum Ventileinsatz (1) in einer ersten Stellung positionierbar ist, in der die Vorrichtung (8) zur Einstellung der Strömungsrichtung über eine Verzahnung (17, 18) drehfest mit einem Kopfstück (11) des Ventileinsatzes (1)verbunden ist, wobei das Kopfstück (11) fest in einem Gehäuse eines Heizkörperventils (2) verschraubt ist und die Vorrichtung (9) zur Voreinstellung der Durchflussmenge relativ zur Vorrichtung (8) zur Einstellung der Strömungsrichtung verdrehbar ist.

4. Heizkörper nach einem der Ansprüche 1 bis 3, **dadurch gekennzeichnet, dass** die Vorrichtung (9) zur Voreinstellung der Durchflussmenge ein Regelstück (12) mit einem Abströmfenster (13) aufweist, das durch Verdrehung mit einer in der Vorrichtung (8) zur Einstellung der Strömungsrichtung vorgesehene Abströmöffnung (14) zur Überdeckung bringbar ist, wobei die Abströmöffnung (14) die Strömungsrichtung (7) der aus dem Ventileinsatz (1) abgehenden Durchflussmenge vorgibt.

5. Heizkörper nach einem der Ansprüche 3 oder 4, **dadurch gekennzeichnet, dass** eine zweite durch den Versteller (10) funktionsbedingte Kopplung durch dessen axiales Verschieben in eine zweite Position dadurch erreichbar ist, dass die drehfeste Verbindung der Vorrichtung (8) zur Einstellung der Strömungsrichtung zu dem Kopfstück (11) des Ventileinsatzes (1) hin gelöst ist, und statt dessen eine drehfeste Verbindung zur Vorrichtung (9) zur Voreinstellung der Durchflussmenge über eine zweite Verzahnung (19,20) hergestellt ist.

6. Heizkörper nach einem der Ansprüche 3 bis 5, **dadurch gekennzeichnet, dass** das Verschieben des Verstellers (10) in die zweite Position durch ein erstes Bedienelement (150) und ein zweites Bedienelement (15) durchführbar ist, das auf den Versteller von außen einwirkt und diesen gegen eine Federkraft in die zweite Position überführt.

7. Heizkörper nach Anspruch 6, **dadurch gekennzeichnet, dass** an dem ersten Bedienelement (150) und der Einstellvorrichtung(9)für die Durchflussmenge ineinandergreifende Mitnahmeelemente (34/35) vorgesehen sind, durch die eine Drehbewegung vom ersten Bedienelement (150) auf die Einstellvorrichtung (9) für die Durchflussmenge übertragbar ist, wobei in der zweiten axialen Position des Bedienelementes der Versteller (10) gegen eine Federkraft auf die Einstellvorrichtung (8) für die Strömungsrichtung gedrückt ist, so dass die Verzahnung (19,20)im Eingriff ist und der mit der Einstellvorrichtung (8) für die Abströmrichtung drehfest verbundene Versteller (10)auch mit der Einstellvorrichtung (9) für die Durchflussmenge drehfest verbunden ist, sodass durch die vom Bedienelement ausgeübte Drehbewegung die Abströmrichtung veränderbar ist aber nicht die Durchflussmenge, und wobei in der ersten axialen Position das erste Bedienelement (150) den Versteller (10) frei gibt, der durch die Federkraft von der Vorrichtung (8) weg gegen einen Anschlag im Kopfstück gedrückt ist und in dieser Position der Versteller einerseits drehfest über die eine Verzahnung (17,18) mit dem Kopfstück (11) verbunden ist, andererseits die andere Verzahnung (19, 20) außer Eingriff ist, so dass die vom Bedienelement ausgeübte Drehbewegung in der ersten axialen Position die Abströmrichtung vom Ventileinsatz nicht verändert, jedoch die Durchflussmenge variierbar ist.

8. Heizkörper nach Anspruch 7, **dadurch gekennzeichnet, dass** die Mitnahmeelemente (34,35) bei der Übertragung der Drehbewegung vom ersten Bedienelement (150) auf die Einstellvorrichtung (9) für die Durchflussmenge in der zweiten axialen Position des Bedienelementes zueinander einen größeren Überdeckungsbereich aufweisen als in der ersten axialen Position.

9. Heizkörper nach Anspruch 7 oder 8, **dadurch gekennzeichnet, dass** die Mitnahmeelemente (34,35) im Übergangsbereich von der zweiten axialen Position zur ersten axialen Position einen mechanischen Widerstand (36) aufweisen, um beim Aufsetzen des Bedienelementes die beiden axialen Bereiche bei der Handhabung unterscheiden zu können.

10. Heizkörper nach einem der Ansprüche 3 bis 9, **dadurch gekennzeichnet, dass** auf der von außen zugänglichen Seite der Vorrichtung (9) zur Einstellung der Durchflussmenge eine Skalierung (37) für die Durchflussmenge angebracht ist, die mit einem auf den Versteller (10) angebrachten Sollwertanzeiger (38) korrespondiert.

11. Heizkörper nach Anspruch 10, **dadurch gekennzeichnet, dass** der Sollwertanzeiger (38) fluchtend zur Abströmöffnung (14) angeordnet ist und so auch als Sollwertanzeiger für die Abströmrichtung dient.

12. Heizkörper nach einem der Ansprüche 3 bis 11, **dadurch gekennzeichnet, dass** mit einem zweiten Bedienelement (15) und dem Versteller (10) korrespondierende Rastelemente (16,32) vorgesehen sind, durch die in der zweiten Position des Verstellers (10) eine vom Bedienelement ausgeübte Drehbewegung auf die Vorrichtung (8) zur Einstellung der Strömungsrichtung übertragbar ist, so dass das zugehörige Abströmfenster (14) eine andere Abströmrichtung (7) der Durchflussmenge erzeugt und die Größe der Durchflussmenge erhalten bleibt.

## Claims

1. A radiator (3) having at least two heating elements (4, 5), a radiator valve (2) and a valve insert (1) for the radiator valve (2) for controlling the flow rate of a heating medium and/or for regulating the flow rate of a heating medium, in particular also independently from the differential pressure acting over the entire radiator valve, comprising a preadjusting device (9) by means of which the flow rate can be restricted to a predetermined value, and that is positioned with an inlet and outlet opening (22, 14) relative to the radiator valve (2) such that the flow rate (6) supplied to the radiator (3) can be split in an arbitrary proportion between the at least two heating elements (4, 5) of the radiator, and/or optionally the flow rate (6) flows in an aligned manner into the one or other heating element (4, 5), **characterized by that** in the valve insert (1) a device (8) for adjusting the flow direction (7) is integrated that is accessible and actuatable from outside, namely in the assembled condition of the valve insert (1) and during operation of the radiator (3), and allows a direct change of the flow direction (7) and/or a splitting of the flow rate (6) that flows off from the valve insert (1).

2. The radiator of claim 1, **characterized by that** both devices (8, 9) are coupled by non-rotatable connections, in particular a tooth arrangement (17, 18) and (19, 20) such that, on one hand, when operating the device (8) for adjusting the flow direction (7) the value adjusted by the device (9) for preadjusting the flow rate (6) cannot be modified, on the other hand, when operating the device (9) for preadjusting the flow rate (6), the value given by the device (8) for adjusting the flow direction can be maintained.

3. The radiator of one of claims 1 or 2, **characterized by that** an axially displaceable adjuster (10) that is connected non-rotatably to the device (8) for adjusting the flow direction, can be positioned in the longitudinal axis to the valve insert (1) in a first position, in which the device (8) for adjusting the flow direction by a tooth arrangement (17, 18) is non-rotatably connected to a head piece (11) of the valve insert (1), the head piece (11) being solidly bolted in a housing of a radiator valve (2), and the device (9) for preadjusting the flow rate relative to the device (8) for adjusting the flow direction being rotatable.

4. The radiator of one of claims 1 to 3, **characterized by that** the device (9) for preadjusting the flow rate includes a controlling piece (12) with a flow-off window (13) that, by turning, can be brought into coverage of an outlet opening (14) provided in the device (8) for adjusting the flow direction, the outlet opening (14) determining the flow direction (7) of the flow rate out of the valve insert (1).

5. The radiator of one of claims 3 or 4, **characterized by that** a second coupling caused by the function of the adjuster (10) by the axial displacement thereof into a second position can be achieved by that the non-rotatable connection of the device (8) for adjusting the flow direction is released toward the head piece (11) of the valve insert (1), and instead a non-rotatable connection toward the device (9) for preadjusting the flow rate is established by a second tooth arrangement (19, 20).

6. The radiator of one of claims 3 to 5, **characterized by that** the displacement of the adjuster (10) into the second position can be performed by a first operating element (150) and a second operating element (15) that acts from outside on the adjuster and transfers it against a spring force into the second position.

7. The radiator of claim 6, **characterized by that** at the first operating element (150) and the device (9) for preadjusting the flow rate, interlocking driver elements (34/35) are provided, by means of which a rotational movement can be transferred from the first operating element (150) to the device (9) for adjusting the flow rate, in the second axial position of the operating element the adjuster (10) being pressed against a spring force onto the device (8) for adjusting the flow direction, such that the tooth arrangement (19, 20) is in engagement and the adjuster (10) non-rotatably connected to the device (8) for adjusting the flow-off direction is also non-rotatably connected to the device (9) for adjusting the flow rate, such that by the rotational movement exerted by the operating element, the flow-off direction can be changed, but not the flow rate, and in the first axial position the first operating element (150) releasing the adjuster (10) that is pressed by the spring force away from the device (8) against a stop in the head piece, and in this position the adjuster, on one hand, being non-rotatably connected, by the one tooth arrangement (17, 18), to the head piece (11), on the other hand, the other tooth arrangement (19, 20) being out of engagement, such that the rotational movement exerted by the operating element in the first axial position does not change the flow-off direction from the valve insert, however, the flow rate is variable.

8. The radiator of claim 7, **characterized by that** the driver elements (34, 35), when transferring the rotational movement from the first operating element (150) to the device (9) for adjusting the flow rate, in the second axial position of the operating element, have a larger range of coverage of each other than in the first axial position.

9. The radiator of claim 7 or 8, **characterized by that** the driver elements (34, 35), in the transition area from the second axial position to the first axial position, have a mechanical resistance (36), in order to, when putting the operating element in place, distinguish between the two axial ranges during handling.

10. The radiator of one of claims 3 to 9, **characterized by that** on the side accessible from outside of the device (9) for adjusting the flow rate, a scale (37) for the flow rate is disposed that corresponds to a setpoint indicator (38) provided on the adjuster (10).

11. The radiator of claim 10, the setpoint indicator (38) is **characterized by that** arranged flush with the outlet opening (14) and thus also serves as a setpoint indicator for the flow-off direction.

12. The radiator of one of claims 3 to 11, **characterized by that** latching elements (16, 32) corresponding to a second operating element (15) and the adjuster (10) are provided, by means of which in the second position of the adjuster (10), a rotational movement exerted by the operating element on the device (8) for adjusting the flow direction can be transferred, such that the respective flow-off window (14) produces a different flow-off direction (7) of the flow rate, and the amount of the flow rate is maintained.

## Revendications

1. Radiateur (3) comportant au moins deux éléments de chauffage (4, 5), une vanne pour radiateur (2) et un insert de vanne (1) pour la vanne pour radiateur (2) pour commander le débit volumique d'un milieu de chauffage et/ou pour régler le débit volumique d'un milieu de chauffage, en particulier aussi quelle que soit la pression différentielle agissant sur la vanne pour radiateur entière, qui comporte un dispositif de préréglage (9), au moyen duquel le débit volumique peut être réduit à une valeur prédéterminée, et qui est positionné avec une ouverture d'entrée et de sortie (22, 14) de la vanne pour radiateur (2) de telle façon, que le débit volumique (6) alimenté au radiateur (3) puisse être réparti dans un rapport quelconque entre les au moins deux éléments de chauffage (4, 5) du radiateur, et/ou optionnellement le débit volumique (6) entre de façon orientée dans l'un ou l'autre élément de chauffage (4, 5), **caractérisé en ce que** dans l'insert de vanne (1) un dispositif (8) de réglage de la direction d'écoulement (7) est intégré, qui est accessible et actionnable depuis l'extérieur, c'est-à-dire dans l'état assemblé de l'insert de vanne (1) et pendant le fonctionnement du radiateur (3), et permet un changement direct de la direction d'écoulement (7) et/ou une répartition du débit volumique (6) sortant de l'insert de vanne (1).

2. Radiateur selon la revendication 1, **caractérisé en ce que** les deux dispositifs (8, 9) sont accouplés par des liages immobilisés en rotation, en particulier une denture (17, 18) et (19, 20) de telle façon, que, à l'un côté, lors de l'actionnement du dispositif (8) de réglage de la direction d'écoulement (7), la valeur réglée par le dispositif (9) de préréglage du débit volumique (6) ne soit pas modifiable, à l'autre côté, lors de l'actionnement du dispositif (9) de préréglage du débit volumique (6), la valeur déterminée par le dispositif (8) de réglage de la direction d'écoulement puisse être préservée.

3. Radiateur selon une des revendications 1 ou 2, **caractérisé en ce qu'**un dispositif de réglage (10) axialement déplaçable, qui est lié de façon immobilisée en rotation au dispositif (8) de réglage de la direction d'écoulement, est positionnable dans l'axe longitudinal de l'insert de vanne (1) dans une première position, dans laquelle le dispositif (8) de réglage de la direction d'écoulement est lié de façon immobilisée en rotation par l'intermédiaire d'une denture (17, 18) à une pièce de tête (11) de l'insert de vanne (l), la pièce de tête (11) étant boulonnée solidairement dans un boîtier d'une vanne pour radiateur (2), et le dispositif (9) de préréglage du débit volumique étant mobile en rotation par rapport au dispositif (8) de réglage de la direction d'écoulement.

4. Radiateur selon une des revendications 1 à 3, **caractérisé en ce que** le dispositif (9) de préréglage du débit volumique comporte une pièce de commande (12) avec une fenêtre d'écoulement (13), qui par rotation peut être mise en recouvrement avec une ouverture de sortie (14) prévue dans le dispositif (8) de réglage de la direction d'écoulement, l'ouverture de sortie (14) imposant la direction d'écoulement (7) du débit volumique sortant de l'insert de vanne (1).

5. Radiateur selon une des revendications 3 ou 4, **caractérisé en ce qu'**un deuxième accouplement dû à la fonction du dispositif de réglage (10) par déplacement axial de celui-ci dans une deuxième position peut être atteint par ce que le liage immobilisé en rotation du dispositif (8) de réglage de la direction d'écoulement à la pièce de tête (11) de l'insert de vanne (1) est désengagé, et au lieu de cela un liage immobilisé en rotation au dispositif (9) de préréglage du débit volumique par l'intermédiaire d'une deuxième denture (19, 20) est établi.

6. Radiateur selon une des revendications 3 à 5, **caractérisé en ce que** le déplacement du dispositif de réglage (10) dans la deuxième position peut être exécuté par un premier élément de commande (150) et un deuxième élément de commande (15), qui agit sur le dispositif de réglage depuis l'extérieur et amène celui-ci contre une force de ressort en la deuxième position.

7. Radiateur selon la revendication 6, **caractérisé en ce qu'**au au premier élément de commande (150) et au dispositif (9) de préréglage du débit volumique, des éléments d'entraînement (34/35) engrenant l'une avec l'autre sont prévus, par lesquels un mouvement rotatif du premier élément de commande (150) peut être transmis au dispositif (9) de préréglage du débit volumique, dans la deuxième position axiale de l'élément de commande le dispositif de réglage (10) étant poussé contre une force de ressort sur le dispositif (8) de réglage de la direction d'écoulement, de façon que la denture (19, 20) soit en engagement et le dispositif de réglage (10) lié de façon immobilisée au dispositif (8) de réglage de la direction d'écoulement en rotation soit aussi lié de façon immobilisée au dispositif (9) de préréglage du débit volumique, de façon que par le mouvement rotatif exécuté par l'élément de commande, la direction d'écoulement soit modifiable, mais pas le débit volumique, et dans la première position axiale le premier élément de commande (150) dégageant le dispositif de réglage (10), qui est poussé par la force de ressort depuis le dispositif (8) contre une butée dans la pièce de tête, et dans cette position le dispositif de réglage, à l'un côté, étant lié de façon immobilisée en rotation par l'intermédiaire d'une denture (17, 18) à la pièce de tête (11), à l'autre côté, l'autre denture (19, 20) étant désengagée, de façon que le mouvement rotatif exécuté par l'élément de commande dans la première position axiale ne modifie pas la direction d'écoulement depuis l'insert de vanne, cependant le débit volumique soit variable.

8. Radiateur selon la revendication 7, **caractérisé en ce que** les éléments d'entraînement (34, 35) lors de la transmission du mouvement rotatif du premier élément de commande (150) au dispositif (9) de préréglage du débit volumique dans la deuxième position axiale de l'élément de commande ont une gamme de recouvrement mutuel supérieure à celle dans la première position axiale.

9. Radiateur selon la revendication 7 ou 8, **caractérisé en ce que** les éléments d'entraînement (34, 35) dans la zone de transition de la deuxième position axiale à la première position axiale ont une résistance mécanique (36), afin de pouvoir distinguer lors de la mise en place de l'élément de commande les deux zones axiales lors de leur manutention.

10. Radiateur selon une des revendications 3 à 9, **caractérisé en ce que** sur le côté du dispositif (9) de préréglage du débit volumique accessible depuis l'extérieur, une échelle graduée (37) pour le débit volumique est prévue, qui correspond à un indicateur d'une valeur de consigne (38) disposé sur le dispositif de réglage (10).

11. Radiateur selon la revendication 10, **caractérisé en ce que** l'indicateur de la valeur de consigne (38) est situé en alignement de l'ouverture de sortie (14) et de telle façon aussi sert d'indicateur de la valeur de consigne pour la direction d'écoulement.

12. Radiateur selon une des revendications 3 à 11, **caractérisé en ce que** des organes d'encliquetage (16, 32) correspondant à un deuxième élément de commande (15) et au dispositif de réglage (10) sont prévus, par lesquels dans la deuxième position du dispositif de réglage (10), un mouvement rotatif exécuté par l'élément de commande peut être transmis au dispositif (8) de réglage de la direction d'écoulement, de façon que la fenêtre d'écoulement (14) respective provoque une direction d'écoulement (7) différente du débit volumique et la valeur du débit volumique soit préservée.
